# EUROPEAN PATENT APPLICATION

(11) **EP 4 797 063 A1**
(43) Date of publication of application: **26.08.2026**
(21) Application number: 24879161.8
(22) Date of filing: 18.10.2024
(51) Int. Cl.: G06F 3/0484, G06F 9/451

(54) **INTERACTION METHOD AND APPARATUS, DEVICE, AND STORAGE MEDIUM**

(30) Priority: 20.10.2023 CN 202311370055
(71) Applicant: Beijing Zitiao Network Technology Co., Ltd., Beijing 100190 (CN)
(72) Inventor: SHI, Yilong, Beijing 100028 (CN); ZHANG, Gongbin, Beijing 100028 (CN); MENG, Zhenzhen, Beijing 100028 (CN); GOU, Yang, Beijing 100028 (CN)
(74) Representative: Grünecker Patent- und Rechtsanwälte PartG mbB
(86) International application number: PCT/CN2024/125930
(87) International publication number: WO 2025/082521

(57) **Abstract**

Embodiments of the disclosure provide a method, an apparatus, an electronic device, and a storage medium for interaction, and relates to the technical field of computers. The method includes: providing a predetermined widget associated with a predetermined creation interface of a predetermined application, displaying, in the predetermined widget, object information of at least one predetermined object in the predetermined application, and displaying a predetermined creation interface corresponding to the predetermined object in the predetermined application in response to triggering of the predetermined widget.

## Description

The present application claims priority to Chinese Patent Application No. 202311370055.7, filed on October 20, 2023, and entitled "METHOD, APPARATUS, DEVICE AND STORAGE MEDIUM FOR INTERACTION", the entire content of which is incorporated herein by reference.

### FIELD

The embodiment of the present disclosure relates to the technical field of computers, and in particular to a method, an apparatus, a device and a storage medium for interaction.

### BACKGROUND

A widget may be understood as a desktop plugin, and an operating system supporting the widget may support an application program to create a small control or a small component displayed on a desktop, that is, a widget. A user can quickly enter a certain function in the application to which the widget belongs by triggering the widget, thereby improving the convenience of user operation.

### SUMMARY

The embodiment of the present disclosure provides a method, an apparatus, a device and a storage medium for interaction.

According to a first aspect, an embodiment of the present disclosure provides a method of interaction, including: providing a predetermined widget, where the predetermined widget is associated with a predetermined creation interface of a predetermined application; displaying, in the predetermined widget, object information of at least one predetermined object in the predetermined application, where the predetermined object is configured to create a media work in the predetermined application; and displaying a predetermined creation interface corresponding to the predetermined object in the predetermined application in response to triggering of the predetermined widget.

According to a second aspect, an embodiment of the present disclosure further provides an apparatus for interaction, including: a widget providing module configured to provide a predetermined widget, where the predetermined widget is associated with a predetermined creation interface of a predetermined application; an object information display module configured to display, in the predetermined widget, object information of at least one predetermined object in the predetermined application, where the predetermined object is configured to create a media work in the predetermined application; and an interface display module configured to display a predetermined creation interface corresponding to the predetermined object in the predetermined application in response to triggering of the predetermined widget.

In a third aspect, an embodiment of the present disclosure further provides an electronic device, an electronic device, where the electronic device includes: one or more processors; and a storage device, configured to store one or more programs, where the one or more programs, when executed by the one or more processors, cause the one or more processors to perform the method of interaction provided in the embodiments of the present disclosure.

In a fourth aspect, an embodiment of the present disclosure further provides a storage medium including computer-executable instructions, the computer-executable instructions, when executed by a computer processor, implementing the method of interaction provided in the embodiments of the present disclosure.

The interaction solution provided in the embodiments of the present disclosure provides a predetermined widget associated with a predetermined creation interface of a predetermined application. Object information of at least one predetermined object in the predetermined application is displayed in the predetermined widget. The predetermined object is configured to create a media work in the predetermined application. A predetermined creation interface corresponding to the predetermined object in the predetermined application is displayed in response to triggering of the predetermined widget. By employing the above technical solution, a predetermined object for creating a media work is displayed in the widget on the desktop, and the user is supported to quickly enter the predetermined creation interface corresponding to the predetermined object in the application by triggering the widget. The user may be prompted to perform creation by displaying the predetermined object for creating the media work, and an operation path for the user to enter the predetermined creation interface may be shortened, thereby improving creation efficiency of the media work and effectively enhancing user experience.

### BRIEF DESCRIPTION OF DRAWINGS

The above and other features, advantages, and aspects of the various embodiments in the present disclosure will become more apparent from the following detailed description taken in combination with the accompanying drawings. Throughout the drawings, the same or similar reference numbers refer to the same or similar elements. It should be understood that the drawings are schematic and that the components and elements are not necessarily drawn to scale.
Fig. 1 is a schematic flowchart of a method of interaction according to an embodiment of the present disclosure;
Fig. 2 is a schematic diagram of interface interaction according to an embodiment of the present disclosure;
Fig. 3 is a schematic flowchart of another method of interaction according to an embodiment of the present disclosure;
Fig. 4 is a schematic diagram of another interface interaction according to an embodiment of the present disclosure;
Fig. 5 is a schematic flowchart of still another method of interaction according to an embodiment of the present disclosure;
Fig. 6 is a schematic diagram of still another interface interaction according to an embodiment of the present disclosure;
Fig. 7 is a schematic diagram of still another interface interaction according to an embodiment of the present disclosure;
Fig. 8 is a schematic structural diagram of an apparatus for interaction according to an embodiment of the present disclosure; and
Fig. 9 is a schematic structural diagram of an electronic device according to an embodiment of the present disclosure.

### DETAILED DESCRIPTION

The embodiments in the present disclosure will be described in more detail below with reference to the accompanying drawings. Although certain embodiments in the present disclosure are shown in the drawings, it would be appreciated that the present disclosure can be implemented in various forms and should not be interpreted as limited to the embodiments described in this specification. On the contrary, these embodiments are provided for a more thorough and complete understanding in the present disclosure. It would be appreciated that the accompanying drawings and embodiments in the present disclosure are only for the purpose of illustration and are not intended to limit the scope of protection in the present disclosure.

It should be understood that steps described in method implementations of the present disclosure may be performed in different orders and/or in parallel. Furthermore, the method implementations may include additional steps and/or omit performing the illustrated steps. The scope of the present disclosure is not limited in this regard.

As used herein, the term "include" and its variations would be appreciated as open-ended inclusions, that is, "include but not limited to". The term "based on" would be appreciated as "at least partially based on". The term "an embodiment" would be appreciated as "at least one embodiment". The term "another embodiment" would be appreciated as "at least one other embodiment". The term "some embodiments" would be appreciated as "at least some embodiments". Relevant definitions of other terms may be described in the following description.

It should be noted that concepts such as "first" and "second" mentioned in the present disclosure are only used to distinguish different apparatuses, modules, or units, and are not used to limit the order or interdependence of functions performed by these apparatuses, modules, or units.

It should be noted that modifications of "a" and "a plurality of" mentioned in the present disclosure are illustrative rather than restrictive, and those skilled in the art should understand that the modifications should be understood as "one or more" unless otherwise clearly indicated in the context.

The names of messages or information exchanged between multiple apparatuses in the implementations of the present disclosure are merely used for illustrative purposes, and are not used to limit the scope of these messages or information.

It would be appreciated that before the technical solution disclosed in the embodiments in the present disclosure is used, users should be informed of the type, the scope of use, the use scenario, etc. of the personal information involved in the present disclosure in an appropriate manner and in accordance with relevant laws and regulations, and the authorization of the relevant users may be obtained.

For example, in response to an active request being received from a user, a prompt message is sent to the user to explicitly prompt the user that the operation requested by the user would need acquisition and use of personal information of the user. As such, according to prompt information, users may choose whether to provide personal information to the software or hardware, such as an electronic device, application, server or storage medium, that performs the operations of the technical solution in the present disclosure.

As an optional but non-limiting implementation, in response to the active request being received from the user, the prompt information may be sent to the user via, for example, a pop-up window in which the prompt information may be presented in text. In addition, the pop-up window may also contain selection controls configured for the user to choose "agree" or "disagree" to provide the personal information to the electronic device.

It would be appreciated that the above process of notification and acquisition of user authorization is only illustrative and does not limit the implementations in the present disclosure. Other methods that meet relevant laws and regulations may also be applied to the implementations in the present disclosure.

It would be appreciated that data involved in the technical solution (including but not limited to the data itself, acquisition or use of the data) should comply with requirements of corresponding laws, regulations, and related provisions.

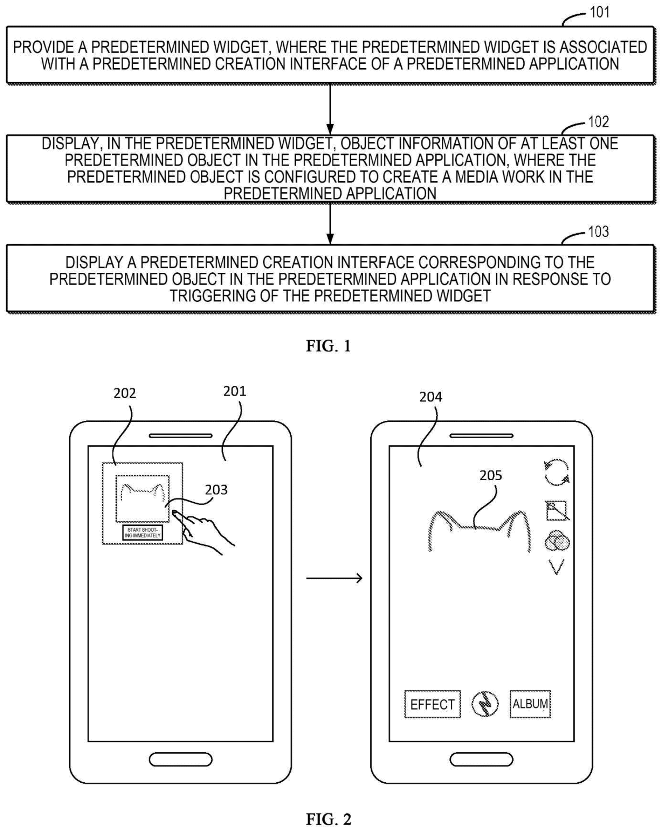

Fig. 1 is a schematic flowchart of a method of interaction according to an embodiment of the present disclosure. The embodiments of the present disclosure are applicable to an interaction scenario. The method may be performed by an apparatus for interaction, and the apparatus may be implemented in a form of software and/or hardware, alternatively, implemented by an electronic device. The electronic device may be a mobile terminal such as a mobile phone, a smart watch, a tablet computer, and a personal digital assistant, or may be a personal computer (PC) terminal or a server.

As shown in Fig. 1, the method includes:
Step 101: provide a predetermined widget, where the predetermined widget is associated with a predetermined creation interface of a predetermined application.

In the embodiments of the present disclosure, the predetermined application may be an application having a media work creation function, and a specific type of the application is not limited. The predetermined widget is associated with a predetermined creation interface of the predetermined application. The predetermined creation interface is an interface for media content creation. The predetermined widget may be understood as a widget associated with the predetermined application and used for triggering to display the predetermined creation interface in the predetermined application. For example, the predetermined creation interface may include a predetermined shooting interface and/or a predetermined editing interface. The specific form of the media work is not limited, and may include a picture work, an image-text work, a video work or a music work, and the like.

Step 102: display, in the predetermined widget, object information of at least one predetermined object in the predetermined application, where the predetermined object is configured to create a media work in the predetermined application.

For example, the predetermined object may include an element related to the media work, and the type of the predetermined object may include, for example, a creation theme or a creation element. The creation theme may include related information or objects for reflecting the subject and the core topic of the media content, may include platform activity or platform gameplay in the predetermined application, and the like, such as a topic or a challenge. Types of creation elements may include effects, templates, and music, among others. The effect may perform effect processing or adding effect elements and the like on the basic material (for example, a picture or a video), for example, a stylized effect or an interactive game, and the like. The template may include a function of processing the content of the basic material, such as beautification, splicing, or editing.

For example, the object information may include, for example, attribute information (for example, a name or a title) of the predetermined object and/or associated image information (for example, an icon or a cover image). A specific quantity of predetermined widgets is not limited, and may be one or more. A specific quantity of predetermined objects corresponding to a same predetermined widget is not limited, and if there are a plurality of predetermined objects, corresponding object information may be respectively displayed for each predetermined object. Taking the predetermined object being the effect as an example, if the same predetermined widget corresponds to one effect, the effect name and the effect cover of the effect may be displayed in the predetermined widget; if the same predetermined widget corresponds to three effects, the effect names and the effect covers corresponding to the three effects may be displayed in the predetermined widget respectively.

Step 103: display a predetermined creation interface corresponding to the predetermined object in the predetermined application in response to triggering of the predetermined widget.

For example, the triggering may be a click for the predetermined widget, and the like, and a valid trigger region of the trigger operation may be provided in a display region where the predetermined widget is located.

For example, after receiving the triggering for the predetermined widget, the predetermined application is invoked, and the predetermined creation interface corresponding to the predetermined object in the predetermined application is directly entered. The predetermined creation interface corresponding to the predetermined object may be understood as the creation interface associated with the predetermined object in the predetermined application, and the specific association approach is not limited. The creation interface may include a shooting interface, and the shooting interface may include a shooting control, a shooting parameter setting control, a creation element setting control, and a basic material selection control (for example, an album entry).

Alternatively, in accordance with the type of the predetermined object including the creation theme, the work posting path corresponding to the predetermined creation interface is associated with the predetermined object. Specifically, in response to the type of the predetermined object including the creation theme, a work post path corresponding to the predetermined creation interface is set to be associated with the predetermined object. The predetermined creation interface may also be understood as a creation interface for generating media content by applying the predetermined object. For example, in the predetermined application, when browsing the media work, the user may trigger participation in a creation theme that the media work has participated in the user may also change the creation theme by actively modifying or searching. After determining to participate in the creation theme, the user may enter a corresponding creation interface. In a work post interface after the media work is created, theme information such as a theme name of the participated creation theme may be automatically displayed, that is, a work post path is associated with the creation theme. Alternatively, after the media work is posted, an associated control of the creation theme may be displayed in the posted work. Theme information may be displayed in the associated control to prompt the user to participate in creation of the creation theme. The work post path may also be understood as being associated with the creation theme. In the embodiments of the present disclosure, the creation interface of the creation theme may be quickly entered by triggering the predetermined widget, thereby improving the creation efficiency of the media work related to the creation theme.

Alternatively, in response to the type of the predetermined object including the creation theme, a target control associated with the creation theme is displayed on the predetermined creation interface. For example, the theme sticker associated with the creation theme is presented on the predetermined shooting interface and/or the predetermined editing interface as the target control the creation theme in the widget may be displayed in the theme sticker, and the user is supported to adjust the theme sticker. Meanwhile, the user may also perform a modification of the creation theme through the theme sticker. By presenting the target control, the user may be prompted that media content creation is currently being performed based on the creation theme.

Alternatively, in accordance with the type of the predetermined object including the creation element, the predetermined object is applied to the predetermined creation interface. Specifically, in response to the type of the predetermined object including the creation element, the predetermined object is applied in the predetermined creation interface. For example, after the predetermined widget is triggered, the creation element is automatically applied in the entered creation interface, so that the user may quickly use the applied creation element to create the media work, improving the creation efficiency of the media work related to the creation element.

Alternatively, the target prompt information may also be displayed in the predetermined widget. The target prompt information prompts creation of media content by using the predetermined object, or prompts triggering of the predetermined widget to enter a predetermined creation interface corresponding to the predetermined object. The target prompt information may be text information, such as "What to Shoot Today," "Start Shooting Immediately," or "Shoot the Same Style."

Alternatively, the creation control may also be displayed in the predetermined widget. displaying the predetermined creation interface corresponding to the predetermined object in the predetermined application in response to the triggering of the predetermined widget includes: displaying, in response to triggering of the creation control, the predetermined creation interface corresponding to the predetermined object in the predetermined application. It may be understood that the target prompt information may be displayed in the creation control of the predetermined widget.

Fig. 2 is a schematic diagram of an interface interaction provided in the embodiments of the present disclosure. As shown in Fig. 2, a predetermined widget 202 is provided for a desktop 201. Object information 203 of a predetermined object of a type of a creation element is displayed in the predetermined widget 202. The predetermined object may be, for example, a cat ear shooting effect, and the object information may be an icon of the shooting effect. After the user clicks the predetermined widget 202, a predetermined creation interface 204 corresponding to the predetermined object is displayed. In the interface, the predetermined object is automatically applied. For example, a cat ear shooting effect 205 is automatically displayed as shown in Fig. 2, so that the user may conveniently and quickly use the cat ear shooting effect to create a media work.

The interaction method provided in the embodiments of the present disclosure provides a predetermined widget associated with a predetermined creation interface of a predetermined application. Object information of at least one predetermined object in the predetermined application is displayed in the predetermined widget. The predetermined object is configured to create a media work in the predetermined application. A predetermined creation interface corresponding to the predetermined object in the predetermined application is displayed in response to triggering of the predetermined widget. By employing the above technical solution, a predetermined object for creating a media work is displayed in the widget on the desktop, and the user is supported to quickly enter the predetermined creation interface corresponding to the predetermined object in the application by triggering the widget. The user may be prompted to perform creation by displaying the predetermined object for creating the media work, and an operation path for the user to enter the predetermined creation interface may be shortened, thereby improving creation efficiency of the media work and effectively enhancing user experience.

Alternatively, displaying the predetermined creation interface corresponding to the predetermined object in the predetermined application in response to the triggering for the predetermined widget includes: displaying the predetermined creation interface corresponding to the predetermined object in the predetermined application, in response to the triggering for the predetermined widget, in accordance with determining that the predetermined application is in a logged-in state. Alternatively, the method may further include: in response to the triggering of the predetermined widget, displaying a login interface in the predetermined application, in accordance with determining that the predetermined application is in a logged-out state. In response to a successful login, the predetermined creation interface corresponding to the predetermined object is entered. Alternatively, in accordance with determining that the predetermined application is in the logged-out state, object information and login prompt information of at least one predetermined object in the predetermined application are displayed in the predetermined widget, where the login prompt information prompts the user to display the login interface by triggering the predetermined widget.

In some embodiments, the method further includes: updating, in response to a predetermined update event being triggered, the predetermined object to which the object information for displaying in the predetermined widget belongs. Therefore, the predetermined object displayed in the predetermined widget may be dynamically updated, so that the display of the predetermined object in the predetermined widget is more flexible. The user may view richer predetermined objects on the desktop, improving the work creation efficiency based on different predetermined objects.

For example, it is assumed that the type of the predetermined object is an effect, and if the predetermined object currently used for displaying in the predetermined widget is the effect a, in accordance with detecting that the predetermined update event is triggered, the predetermined object is updated. For example, the effect a is updated to the effect b. The predetermined update event may be set according to actual requirements. The update approach may be, for example, requesting a server corresponding to the predetermined application to deliver object information of a new predetermined object.

In some embodiments, the predetermined update event being triggered includes: a current time reaching a predetermined update time, where the predetermined update time is determined based on a predetermined update period. Thus, the periodic update of the predetermined object may be implemented, where the predetermined update period may be set according to actual requirements, such as 2 hours or 3 minutes and the like.

In some embodiments, the predetermined update event being triggered includes: returning to a desktop. Therefore, in accordance with the user returning the desktop each time, the object information of the new predetermined object may be viewed, thereby improving the user experience.

In some embodiments, the predetermined update event being triggered includes: an object update for the predetermined widget. Therefore, when the user wants to view the object information of the new predetermined object, the user experience may be improved by actively inputting the object update.

In some embodiments, the display of the at least one predetermined object changes based on a user currently logged into the predetermined application. Therefore, different users may view different predetermined objects, and the user experience is improved.

In some embodiments, the method further includes: before providing the predetermined widget, displaying predetermined prompt information in response to determining that a predetermined condition is satisfied, where the predetermined prompt information prompts creation of the predetermined widget. Therefore, the predetermined prompt information may be displayed in the predetermined application program to prompt the user to create the predetermined widget, so that the user may view the predetermined widget on the desktop.

In some embodiments, determining that the predetermined condition is satisfied includes at least one of: entering a work display interface, where at least one media work is displayed in the work display interface; completing media work posting; or exiting a creation interface without completing creation of the media work. Therefore, in the scenario related to the creation of the media work, the predetermined prompt information is displayed to prompt the user to create the predetermined widget, thereby improving the convenience of the user to create the media work.

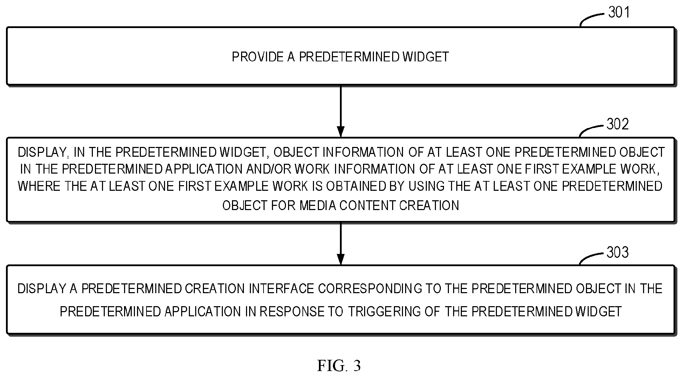

Fig. 3 is a schematic flowchart of another method of interaction according to an embodiment of the present disclosure. The embodiments of the present disclosure are optimized based on the above embodiments and the optional solutions thereof. Specifically, the method includes the following steps.

Step 301: provide a predetermined widget.

Step 302: display, in the predetermined widget, the object information of the at least one predetermined object in the predetermined application and/or work information of at least one first example work, where the at least one first example work is obtained by using the at least one predetermined object for media content creation.

For example, the first example work may be a work in which a user other than a current user performs media content creation by using the predetermined object and posts the work in the predetermined application. A specific number of the first example work may be one or more. The work information may include, for example, image information associated with the first example work, such as a work cover or a video screenshot. A relative display position relationship between the work information and the object information is not limited. For example, the work information may be displayed on the right side of the object information. In accordance with the work information being image information, the work information may also be displayed on the lower layer of the object information. For example, an image as the work information may serve as a background image of the predetermined widget.

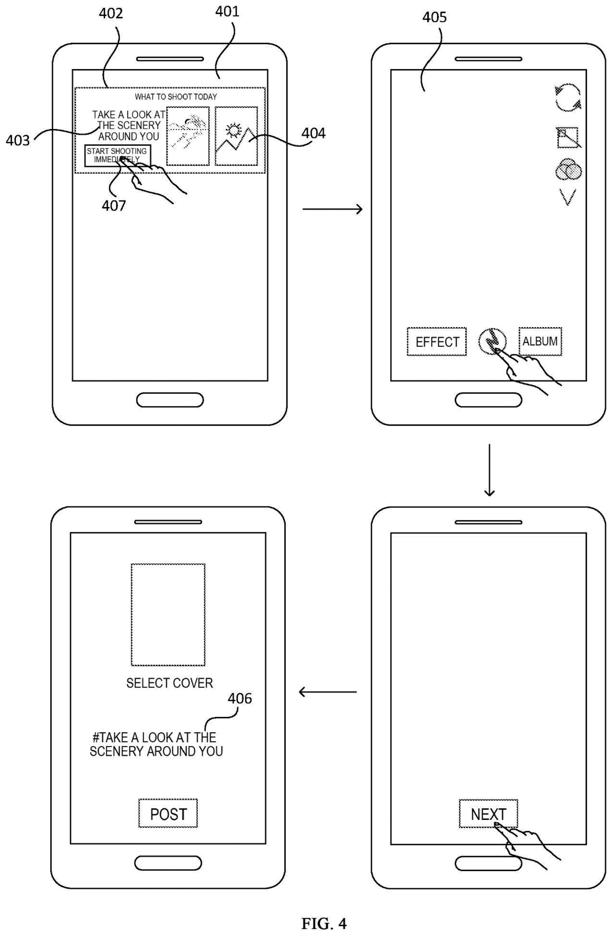

Fig. 4 is a schematic diagram of another interface interaction according to an embodiment of the present disclosure. As shown in Fig. 4, a predetermined widget 402 is provided in a desktop 401. Object information 403 of a predetermined object of a type of a creation theme is displayed in the predetermined widget 402. The predetermined object may be, for example, a theme of "Take a Look at the Scenery Around You," and content of the object information 403 may be a name of the creation theme. In the predetermined widget 402, work information 404 of two first example works is further displayed.

Step 303: display the predetermined creation interface corresponding to the predetermined object in the predetermined application in response to the triggering of the predetermined widget.

As shown in Fig. 4, after the user clicks the predetermined widget 402, a predetermined creation interface 405 corresponding to the predetermined object is entered. A shooting control may be included in the predetermined creation interface 405. After the user clicks the shooting control, shooting is started. After shooting is completed, a post interface is entered by triggering a control such as a next step. In the post interface, a theme name 406 of the theme of "Take a Look at the Scenery Around You" is displayed, that is, a work post path is associated with the predetermined object. After the user triggers a post control, posting of the media work created based on the theme may be implemented.

Alternatively, as shown in Fig. 4, a creation control 407 is displayed in the predetermined widget 402, where target prompt information "Start Shooting Immediately" is included. After the user clicks the creation control 407, the predetermined creation interface 405 is displayed.

The interaction method provided in the embodiments of the present disclosure presents object information of a predetermined object for creating a media work in a predetermined widget provided on a desktop and meanwhile presents work information of an example work created by using the predetermined object. The user may conveniently view the effect of a related media work in the predetermined widget, and richer example work and creative inspiration may be provided for the user, so that creation efficiency of the user may be further improved, and user experience may be enhanced.

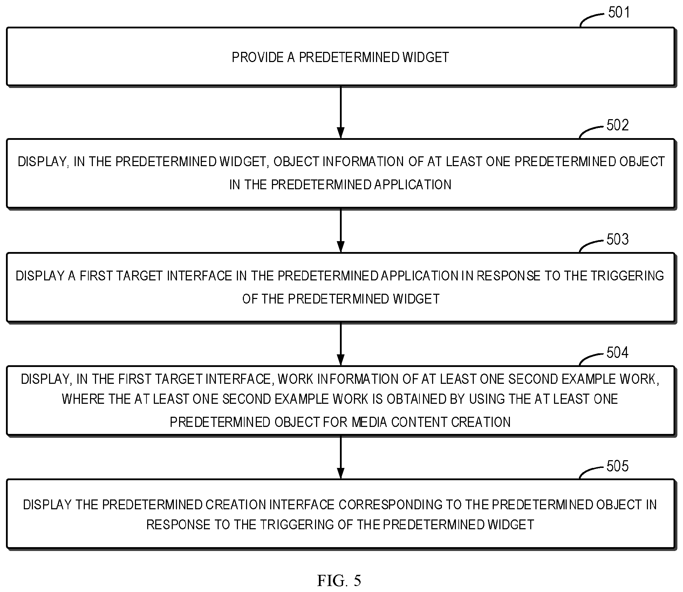

Fig. 5 is a schematic flowchart of still another method of interaction according to an embodiment of the present disclosure.

Step 501: provide a predetermined widget.

Step 502: display, in the predetermined widget, the object information of the at least one predetermined object in the predetermined application.

Step 503: display a first target interface in the predetermined application in response to the triggering of the predetermined widget.

Alternatively, the predetermined creation interface corresponding to the predetermined object is displayed on a lower layer of the first target interface. The size of the first target interface is smaller than the size of the predetermined creation interface, so that a part of the predetermined creation interface may be displayed.

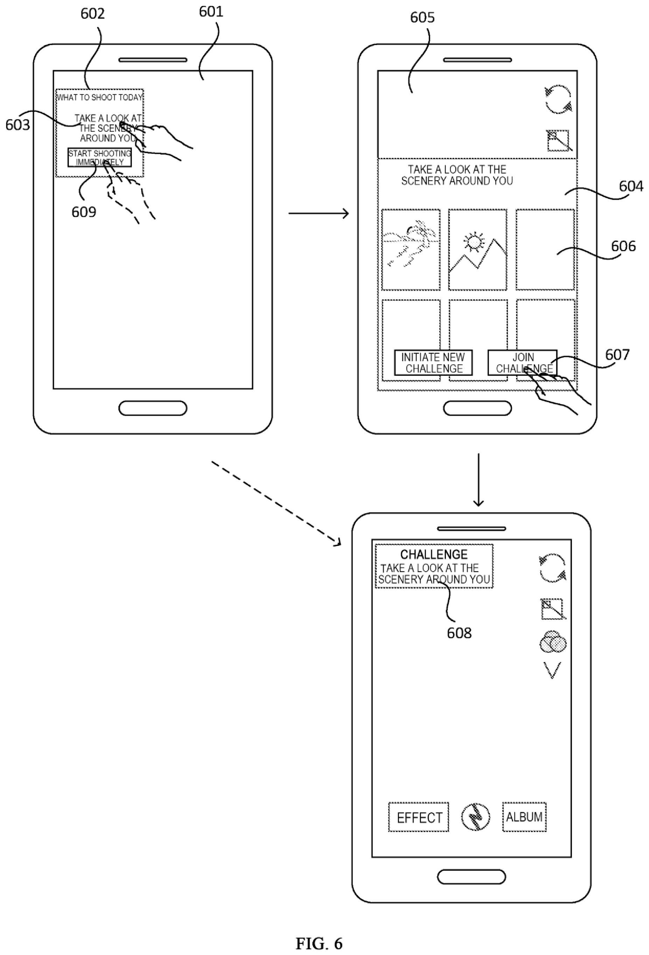

Fig. 6 is a schematic diagram of still another interface interaction according to an embodiment of the present disclosure. As shown in Fig. 6, a predetermined widget 602 is provided in a desktop 601. Object information 603 of a predetermined object of a type of a creation theme is displayed in the predetermined widget 602. The predetermined object may be, for example, a theme of "Take a Look at the Scenery Around You," and content of the object information 603 may be a name of the creation theme. After the user clicks the predetermined widget 602, a first target interface 604 in the predetermined application is entered. Alternatively, a predetermined creation interface 605 corresponding to the predetermined object is displayed on a lower layer of the first target interface 604. The size of the first target interface 604 is smaller than the size of the predetermined creation interface 605. In other embodiments, the first target interface 604 may be displayed in a full-screen approach and support jumping to the predetermined creation interface 605.

Step 504: display, in the first target interface, work information of at least one second example work, where the at least one second example work is obtained by using the at least one predetermined object for media content creation.

For example, the second example work may be a work where a user other than a current user performs creation by using the predetermined object and posts the work in the predetermined application. The specific number of the second example work may be one or more. The work information may include, for example, image information associated with the second example work, such as a work cover or a video screenshot.

As shown in Fig. 6, work information 606 of 6 second example works is displayed in the first target interface 604, and the user may browse more second example works by inputting a swipe and the like.

Step 505: display the predetermined creation interface corresponding to the predetermined object in response to a predetermined operation.

For example, the predetermined operation may be, for example, a closing of the first target interface. The closing may be input by triggering a closing control, or may be input through a gesture.

Alternatively, the predetermined control may also be displayed in the first target interface. In response to a trigger for the predetermined control, the predetermined creation interface corresponding to the predetermined object is entered. As shown in Fig. 6, a predetermined control 607 is further displayed in the first target interface 604. After the user clicks the predetermined control 607, the first target interface 604 is closed and the predetermined creation interface 605 is entered, that is, all interface content of the predetermined creation interface 605 may be completely displayed.

Alternatively, a target control 608 associated with the creation theme may also be displayed in the predetermined creation interface 605, and the target control 608 may be a subject sticker control.

According to the method of interaction provided by the embodiment of the invention, after the user triggers the predetermined widget on the desktop, the first target interface is entered, and the work information of an example work created by using a predetermined object in the predetermined widget for media content creation is displayed in the first target interface. The user may conveniently view the effect of a related media work before entering the predetermined creation interface, and richer example work and creative inspiration may be provided for the user, so that creation efficiency of the user may be further improved, and user experience may be enhanced.

In some embodiments, the above two display solutions of the example work may be combined. For example, object information of at least one predetermined object in the predetermined application and work information of at least one first example work may be displayed in the predetermined widget. In response to triggering of the predetermined widget, the first target interface in the predetermined application is entered, and work information of at least one second example work is displayed in the first target interface. In response to a predetermined operation, the predetermined creation interface corresponding to the predetermined object is entered. Alternatively, the number of the second example work is greater than the number of the first example work. Therefore, the user may view the example works respectively in the predetermined widget and in the target interface.

Alternatively, in response to triggering of the object information, the first target interface in the predetermined application is entered. In response to triggering for the work information of the at least one first example work, the predetermined creation interface in the predetermined application is entered. Therefore, the user may conveniently enter different interfaces respectively by selecting a target of the triggering, thereby improving operation flexibility and convenience. For example, after viewing the first example work, if the user wants to directly perform creation, the user may trigger the object information. If the user wants to view more example works, the user may trigger the work information.

In some embodiments, the method further includes: displaying a second target interface in the predetermined application in response to triggering of the object information; and displaying, in the second target interface, work information of at least one third example work, where the at least one third example work is obtained by using the at least one predetermined object for media content creation. Therefore, richer viewing example works may be provided for the user, so that the viewing of the example works is more flexible.

Alternatively, in the second target interface, the predetermined creation interface corresponding to the predetermined object is displayed in response to a target operation. Alternatively, the second target interface may be the same as the first target interface, and the third example work may be the same as the second example work. That is, the alternative solution may correspond to: displaying a first target interface in the predetermined application in response to the triggering of the object information; displaying, in the first target interface, work information of at least one second example work; and displaying the predetermined creation interface corresponding to the predetermined object in response to a predetermined operation.

Alternatively, as shown in Fig. 6, object information 603 and a creation control 609 are displayed in the predetermined widget 602. If the user clicks the object information 603, the first target interface is displayed, and the work information of the second example work is displayed in the first target interface. If the user clicks the creation control 609, the predetermined creation interface 605 may be directly displayed.

In some embodiments, displaying, in the predetermined widget, object information of at least one predetermined object in the predetermined application includes: displaying, in the predetermined widget, object information of a plurality of predetermined objects in the predetermined application. Displaying the predetermined creation interface corresponding to the predetermined object in the predetermined application in response to triggering of the predetermined widget includes: displaying the predetermined creation interface corresponding to a target predetermined object in the predetermined application in response to triggering of object information of the target predetermined object in the predetermined widget, the target predetermined object being one of the plurality of predetermined objects. Therefore, object information of the plurality of predetermined objects may be simultaneously displayed in the predetermined widget, so that more options may be provided for the user. The target predetermined object corresponding to the predetermined creation interface to be entered may be determined according to a target object of the user triggering, thereby improving convenience of media work creation based on the target predetermined object.

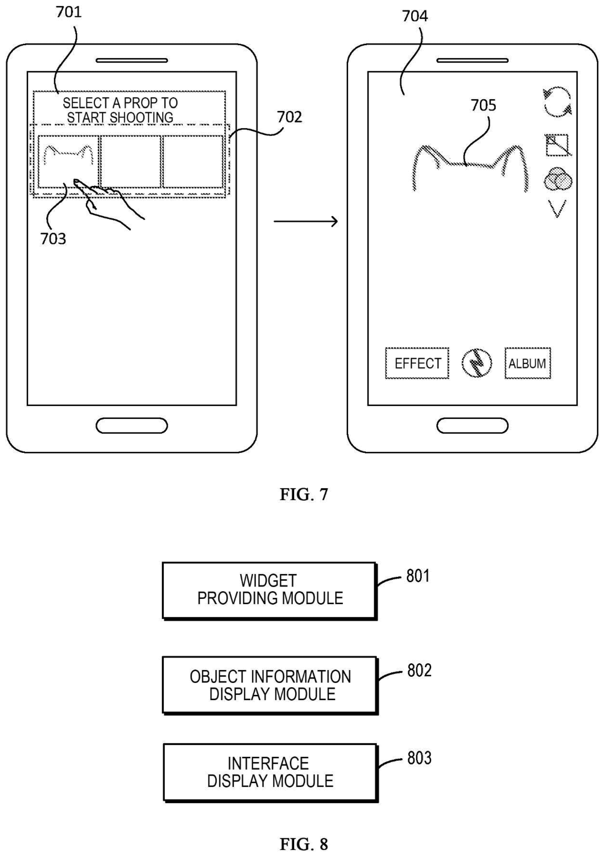

For example, Fig. 7 is a schematic diagram of another interface interaction according to an embodiment of the present disclosure. As shown in Fig. 7, a predetermined widget 701 is provided. Object information 702 of a plurality of predetermined objects of a type of a creation element is displayed in the predetermined widget 701. After the user clicks object information 703 of a target predetermined object, a predetermined creation interface 704 corresponding to the target predetermined object is entered. In the interface, the target predetermined object is automatically applied. For example, a cat ear shooting effect 705 is automatically loaded and displayed as shown in Fig. 7, so that the user may conveniently and quickly use the cat ear shooting effect to create a media work.

Fig. 8 is a schematic structural diagram of an apparatus for interaction according to an embodiment of the present disclosure. As shown in Fig. 8, the apparatus includes:
a widget providing module 801 configured to provide a predetermined widget, where the predetermined widget is associated with a predetermined creation interface of a predetermined application;
an object information display module 802 configured to display, in the predetermined widget, object information of at least one predetermined object in the predetermined application, where the predetermined object is configured to create a media work in the predetermined application;
an interface display module 803 configured to display a predetermined creation interface corresponding to the predetermined object in the predetermined application in response to triggering of the predetermined widget.

The interaction apparatus provided in the embodiments of the present disclosure provides a predetermined widget associated with a predetermined creation interface of a predetermined application. Object information of at least one predetermined object in the predetermined application is displayed in the predetermined widget. The predetermined object is configured to create a media work in the predetermined application. A predetermined creation interface corresponding to the predetermined object in the predetermined application is displayed in response to triggering of the predetermined widget. By employing the above technical solution, a predetermined object for creating a media work is displayed in the widget on the desktop, and the user is supported to quickly enter the predetermined creation interface corresponding to the predetermined object in the application by triggering the widget. The user may be prompted to perform creation by displaying the predetermined object for creating the media work, and an operation path for the user to enter the predetermined creation interface may be shortened, thereby improving creation efficiency of the media work and effectively enhancing user experience.

Alternatively, the object information display module is specifically configured to: display, in the predetermined widget, the object information of the at least one predetermined object in the predetermined application and/or work information of at least one first example work, where the at least one first example work is obtained by using the at least one predetermined object for media content creation.

Alternatively, the interface entry module includes:
a target interface display unit, configured to display a target interface in the predetermined application in response to the triggering of the predetermined widget;
a work information display unit, configured to display, in the target interface, work information of at least one second example work, where the at least one second example work is obtained by using the at least one predetermined object for media content creation;
a predetermined creation interface display unit, configured to display the predetermined creation interface corresponding to the predetermined object in response to a predetermined operation.

Alternatively, a creation control is presented in the predetermined widget. The interface display module is specifically configured to: display the predetermined creation interface corresponding to the predetermined object in the predetermined application in response to the triggering of the predetermined widget.

Alternatively, the apparatus further includes:
a target interface display module, configured to display a second target interface in the predetermined application in response to triggering of the object information;
a work information display module, configured to display, in the second target interface, work information of at least one third example work, where the at least one third example work is obtained by using the at least one predetermined object for media content creation.

Alternatively, the type of the predetermined object includes a creation theme and/or a creation element.

Alternatively, the apparatus further includes:
a theme association module, configured to, after displaying the predetermined creation interface corresponding to the predetermined object in the predetermined application in response to the triggering of the predetermined widget, display, in the predetermined creation interface, a target control associated with the creation theme, and/or set a work post path corresponding to the predetermined creation interface, to be associated with the predetermined object, in response to the type of the predetermined object including the creation theme; and/or
an element application module, configured to, after displaying the predetermined creation interface corresponding to the predetermined object in the predetermined application in response to the triggering of the predetermined widget, apply the predetermined object in the predetermined creation interface in response to the type of the predetermined object including the creation element.

Alternatively, the apparatus further includes:
an object updating module, configured to update, in response to a predetermined update event being triggered, the predetermined object to which the object information for displaying in the predetermined widget belongs.

Alternatively, the predetermined update event being triggered includes at least one of:
a current time reaching a predetermined update time, where the predetermined update time is determined based on a predetermined update period;
returning to a desktop; or
an object update for the predetermined widget.

Alternatively, the apparatus further includes:
a prompt information display module, configured to before providing the predetermined widget, display predetermined prompt information in response to determining that a predetermined condition is satisfied, where the predetermined prompt information prompts creation of the predetermined widget.

Alternatively, determining that the predetermined condition is satisfied includes at least one of:
entering a work display interface, where at least one media work is displayed in the work display interface;
completing media work posting; or
exiting a creation interface without completing creation of the media work.

Alternatively, the object information display module is specifically configured to:
display, in the predetermined widget, object information of a plurality of predetermined objects in the predetermined application.

The interface display module is specifically configured to: display a predetermined creation interface corresponding to a target predetermined object in the predetermined application, in response to triggering of object information of the target predetermined object in the predetermined widget.

Alternatively, the display of the at least one predetermined object changes based on a user currently logged into the predetermined application.

The apparatus for interaction provided by the embodiments of the present disclosure may perform the method of interaction provided by any embodiments of the present disclosure, and has corresponding functional modules and beneficial effects for performing the method.

It is worth noting that the units and modules included in the above apparatus are only divided according to functional logic, but are not limited to the above division, as long as the corresponding functions may be implemented. In addition, the specific names of the functional units are only for the convenience of distinguishing from each other, and are not used to limit the protection scope of the embodiments of the present disclosure.

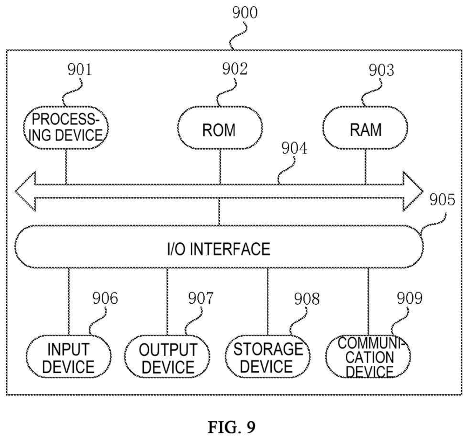

Fig. 9 is a schematic structural diagram of an electronic device according to an embodiment of the present disclosure. Referring to Fig. 9, Fig. 9 illustrates a schematic structural diagram of an electronic device (such as a terminal device or a server in Fig. 9) 900 suitable for implementing the embodiments in the present disclosure. The terminal device in the embodiments of the present may include, but is not limited to, a mobile terminal such as a mobile phone, a notebook computer, a digital broadcast receiver, a personal digital assistant (PDA), a portable Android device (PAD), a portable media player (PMP), an in-vehicle terminal (for example, an in-vehicle navigation terminal), as well as a fixed terminal such as a digital TV, a desktop computer, or the like. The electronic device shown in Fig. 9 is merely an example, and should not impose any limitation on the functions and usage scope of the embodiments in the present disclosure.

As shown in Fig. 9, the electronic device 900 may include a processing device 901 (for example, a central processing unit, a graphics processor, etc.), which may perform various appropriate actions and processing according to a program stored in a read only memory (ROM) 902 or a program loaded into a random access memory (RAM) 903 from a storage device 908. In the RAM 903, various programs and data required by the electronic device 900 are also stored. The processing device 901, the ROM 902, and the RAM 903 are connected to each other through a bus 904. An edit/output (I/O) interface 905 is also connected to bus 904.

Generally, the following devices may be connected to the I/O interface 905: an input device 906 including, for example, a touch screen, a touch pad, a keyboard, a mouse, a camera, a microphone, an accelerometer, a gyroscope, and the like; an output device 909 including, for example, a liquid crystal display (LCD), a speaker, a vibrator, and the like; the storage device 908 including, for example, a magnetic tape, a hard disk, and the like; and a communication device 909. The communication device 909 may allow the electronic device 900 to communicate wirelessly or wired with other devices to exchange data. Although the electronic device 900 with various devices is shown in Fig. 9, it should be understood that it is not required to implement or have all illustrated devices. More or fewer devices may alternatively be implemented or provided.

In particular, according to embodiments in the present disclosure, the process described above with reference to the flowchart may be implemented as a computer software program. For example, the embodiments in the present disclosure include a computer program product including a computer program embodied on a non-transitory computer readable medium, the computer program including program code for performing the method shown in the flowchart. In such embodiments, the computer program may be downloaded and installed from the network through the communication device 909, or installed from the storage device 908, or from the ROM 902. When the computer program is executed by the processing device 901, the foregoing functions defined in the method of the embodiments in the present disclosure are performed.

The names of messages or information exchanged between multiple apparatuses in the implementations of the present disclosure are merely used for illustrative purposes, and are not used to limit the scope of these messages or information.

The electronic device provided by the embodiments of the present disclosure belongs to the same inventive concept as the method of interaction provided by the above embodiment. For technical details not described in detail in the present embodiment, reference may be made to the above embodiment, and the present embodiment has the same beneficial effects as the above embodiment.

An embodiment of the present disclosure provides a computer storage medium having a computer program stored thereon, where the program implements the method of interaction provided by the above embodiment when executed by a processor.

An embodiment of the present disclosure provides a computer program product, including a computer program, where the program, when executed by a processor, implements the method of interaction provided in the foregoing embodiments.

It should be noted that the computer-readable medium described above may be a computer readable signal medium, a computer readable storage medium, or any combination thereof. The computer-readable storage medium may be, for example, but not limited to, an electrical, magnetic, optical, electromagnetic, infrared, or semiconductor system, device, or apparatus, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, the computer-readable storage medium may be any tangible medium containing or storing a program that may be used by or in connection with an instruction execution system, device, or apparatus. In the present disclosure, a computer readable signal medium may include a data signal propagated in baseband or as part of a carrier, where the computer readable program code is carried. Such propagated data signals may take various forms including, but not limited to, electromagnetic signals, optical signals, or any suitable combination thereof. The computer readable signal medium may also be any computer readable medium other than a computer readable storage medium that may send, propagate, or transmit a program for use by or in connection with an instruction execution system, device, or apparatus. The program code embodied on the computer-readable medium may be transmitted with any suitable medium, including, but not limited to: wires, optical cables, radio frequency (RF), and the like, or any suitable combination thereof.

In some implementations, a client and a server may communicate with any currently known or future developed network protocol, such as Hyper Text Transfer Protocol (HTTP), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), and any network currently known or to be developed in the future.

The computer-readable medium described above may be included in the electronic device; or may be separately present without being assembled into the electronic device.

The computer readable medium carries one or more programs, and when the one or more programs are executed by the electronic device, the electronic device is caused to: provide a predetermined widget, where the predetermined widget is associated with a predetermined creation interface of a predetermined application; display, in the predetermined widget, object information of at least one predetermined object in the predetermined application, where the predetermined object is configured to create a media work in the predetermined application; and display a predetermined creation interface corresponding to the predetermined object in the predetermined application in response to triggering of the predetermined widget.

The computer program code for performing the action of the present disclosure may be written in one or more programming languages or a combination thereof, including but not limited to object oriented programming languages, such as Java, Smalltalk, and C + +, as well as conventional procedural programming languages, such as the "C" language or similar programming languages. The program code may be executed entirely on a user computer, partially on a user computer, as a stand-alone software package, partially on a user computer, partially on a remote computer, or entirely on a remote computer or server. In the case of a remote computer, the remote computer may be connected to the user computer through any type of network, including a local area network (LAN) or a wide area network (WAN), or may be connected to an external computer (for example, via the Internet using an Internet service provider).

The flowcharts and block diagrams in the figures illustrate architecture, functionality, and operation of possible implementations of systems, methods, and computer program products according to various embodiments in the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order from that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments in the present disclosure may be implemented in software, or may be implemented in hardware. The names of the modules do not constitute limitations on the modules themselves. For example, the widget providing module may be further described as "a module for providing a predetermined widget, where the predetermined widget is associated with a predetermined creation interface of the predetermined application".

The functions described above may be performed, at least in part, by one or more hardware logic components. For example of non-limiting, illustrative types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, device, or apparatus. The machine-readable medium may be a machine-readable signal medium or a machine-readable storage medium. The machine-readable medium may include, but is not limited to, electronic, magnetic, optical, electromagnetic, infrared, or semiconductor systems, devices, or apparatus, or any suitable combination thereof. More specific examples of machine-readable storage media may include electrical connections based on one or more wires, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

According to one or more embodiments of the present disclosure, a method of interaction is provided, including: providing a predetermined widget, where the predetermined widget is associated with a predetermined creation interface of a predetermined application; displaying, in the predetermined widget, object information of at least one predetermined object in the predetermined application, where the predetermined object is configured to create a media work in the predetermined application; and displaying a predetermined creation interface corresponding to the predetermined object in the predetermined application in response to triggering of the predetermined widget.

According to one or more embodiments of the present disclosure, displaying, in the predetermined widget, the object information of the at least one predetermined object in the predetermined application includes: displaying, in the predetermined widget, the object information of the at least one predetermined object in the predetermined application and/or work information of at least one first example work, where the at least one first example work is obtained by using the at least one predetermined object for media content creation.

According to one or more embodiments of the present disclosure, displaying the predetermined creation interface corresponding to the predetermined object in the predetermined application in response to the triggering of the predetermined widget includes: displaying a first target interface in the predetermined application in response to the triggering of the predetermined widget; displaying, in the first target interface, work information of at least one second example work, where the at least one second example work is obtained by using the at least one predetermined object for media content creation; and displaying the predetermined creation interface corresponding to the predetermined object in response to a predetermined operation.

According to one or more embodiments of the present disclosure, a creation control is presented in the predetermined widget; and displaying the predetermined creation interface corresponding to the predetermined object in the predetermined application in response to the triggering of the predetermined widget includes: displaying, in response to triggering of the creation control, the predetermined creation interface corresponding to the predetermined object in the predetermined application.

According to one or more embodiments of the present disclosure, the method further includes: displaying a second target interface in the predetermined application in response to triggering of the object information; and displaying, in the second target interface, work information of at least one third example work, where the at least one third example work is obtained by using the at least one predetermined object for media content creation.

According to one or more embodiments of the present disclosure, a type of the predetermined object includes a creation theme and/or a creation element.

According to one or more embodiments of the present disclosure, the method further includes: after displaying the predetermined creation interface corresponding to the predetermined object in the predetermined application in response to the triggering of the predetermined widget, displaying, in the predetermined creation interface, a target control associated with the creation theme, and/or setting a work post path corresponding to the predetermined creation interface, to be associated with the predetermined object, in response to the type of the predetermined object including the creation theme; and/or applying the predetermined object in the predetermined creation interface in response to the type of the predetermined object including the creation element.

According to one or more embodiments of the present disclosure, the method further includes: updating, in response to a predetermined update event being triggered, the predetermined object to which the object information for displaying in the predetermined widget belongs.

According to one or more embodiments of the present disclosure, the predetermined update event being triggered includes at least one of: a current time reaching a predetermined update time, where the predetermined update time is determined based on a predetermined update period; returning to a desktop; or an object update for the predetermined widget.

According to one or more embodiments of the present disclosure, he method further includes: before providing the predetermined widget, displaying predetermined prompt information in response to determining that a predetermined condition is satisfied, where the predetermined prompt information prompts creation of the predetermined widget.

According to one or more embodiments of the present disclosure, determining that the predetermined condition is satisfied includes at least one of: entering a work display interface, where at least one media work is displayed in the work display interface; completing media work posting; or exiting a creation interface without completing creation of the media work.

According to one or more embodiments of the present disclosure, displaying, in the predetermined widget, the object information of the at least one predetermined object in the predetermined application includes: displaying, in the predetermined widget, object information of a plurality of predetermined objects in the predetermined application, where displaying the predetermined creation interface corresponding to the predetermined object in the predetermined application in response to triggering of the predetermined widget includes: displaying a predetermined creation interface corresponding to a target predetermined object in the predetermined application, in response to triggering of object information of the target predetermined object in the predetermined widget.

According to one or more embodiments of the present disclosure, the display of the at least one predetermined object changes based on a user currently logged into the predetermined application.

According to one or more embodiments of the present disclosure, an apparatus for interaction is provided, including: a widget providing module configured to provide a predetermined widget, where the predetermined widget is associated with a predetermined creation interface of a predetermined application; an object information display module configured to display, in the predetermined widget, object information of at least one predetermined object in the predetermined application, where the predetermined object is configured to create a media work in the predetermined application; and an interface display module configured to display a predetermined creation interface corresponding to the predetermined object in the predetermined application in response to triggering of the predetermined widget.

According to one or more embodiments of the present disclosure, an electronic device is provided, including: one or more processors; and a storage device configured to store one or more programs, the one or more programs, when executed by the one or more processors, causing the one or more processors to perform the method of interaction provided in the embodiments of the present disclosure.

According to one or more embodiments of the present disclosure, a storage medium is provided, including computer-executable instructions, the computer-executable instructions, when executed by a computer processor, implementing the method of interaction provided in the embodiments of the present disclosure.

The above description is merely an illustration of the preferred embodiments in the present disclosure and the principles of the applied technology. It should be understood by those skilled in the art that the scope of the present disclosure is not limited to the technical solutions of the specific combination of the above technical features, and should also cover other technical solutions formed by any combination of the above technical features or their equivalent features without departing from the above disclosed concept. For example, technical solutions formed by replacing the above features with technical features having similar functions as disclosed (but not limited to those disclosed) in the present disclosure are also included.

Further, although operations are depicted in a particular order, this should not be understood to require that these operations be performed in the particular order shown or in sequential order. In certain circumstances, multitasking and parallel processing may be advantageous. Likewise, although several specific implementation details are included in the above discussion, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and/or methodological acts, it is to be understood that the subject matter defined in the appended claims is not necessarily limited to the specific features or acts described above. Rather, the specific features and acts described above are merely illustrative forms of implementing the claims.

## Claims

1. A method of interaction, comprising:
providing a predetermined widget, wherein the predetermined widget is associated with a predetermined creation interface of a predetermined application;
displaying, in the predetermined widget, object information of at least one predetermined object in the predetermined application, wherein the predetermined object is configured to create a media work in the predetermined application; and
displaying a predetermined creation interface corresponding to the predetermined object in the predetermined application in response to triggering of the predetermined widget.

2. The method of claim 1, wherein displaying, in the predetermined widget, the object information of the at least one predetermined object in the predetermined application comprises:
displaying, in the predetermined widget, the object information of the at least one predetermined object in the predetermined application and/or work information of at least one first example work, wherein the at least one first example work is obtained by using the at least one predetermined object for media content creation.

3. The method of claim 1, wherein displaying the predetermined creation interface corresponding to the predetermined object in the predetermined application in response to the triggering of the predetermined widget comprises:
displaying a first target interface in the predetermined application in response to the triggering of the predetermined widget;
displaying, in the first target interface, work information of at least one second example work, wherein the at least one second example work is obtained by using the at least one predetermined object for media content creation; and
displaying the predetermined creation interface corresponding to the predetermined object in response to a predetermined operation.

4. The method of claim 1, wherein a creation control is presented in the predetermined widget; and displaying the predetermined creation interface corresponding to the predetermined object in the predetermined application in response to the triggering of the predetermined widget comprises:
displaying, in response to triggering of the creation control, the predetermined creation interface corresponding to the predetermined object in the predetermined application.

5. The method of claim 1, further comprising:
displaying a second target interface in the predetermined application in response to triggering of the object information; and
displaying, in the second target interface, work information of at least one third example work, wherein the at least one third example work is obtained by using the at least one predetermined object for media content creation.

6. The method of claim 1, wherein a type of the predetermined object comprises a creation theme and/or a creation element.

7. The method of claim 6, wherein the method further comprises: after displaying the predetermined creation interface corresponding to the predetermined object in the predetermined application in response to the triggering of the predetermined widget,
displaying, in the predetermined creation interface, a target control associated with the creation theme, and/or setting a work post path corresponding to the predetermined creation interface, to be associated with the predetermined object, in response to the type of the predetermined object comprising the creation theme; and/or
applying the predetermined object in the predetermined creation interface in response to the type of the predetermined object comprising the creation element.

8. The method of claim 1, further comprising:
updating, in response to a predetermined update event being triggered, the predetermined object to which the object information for displaying in the predetermined widget belongs.

9. The method of claim 8, wherein the predetermined update event being triggered comprises at least one of:
a current time reaching a predetermined update time, wherein the predetermined update time is determined based on a predetermined update period;
returning to a desktop; or
an object update for the predetermined widget.

10. The method of claim 1, wherein the method further comprises: before providing the predetermined widget,
displaying predetermined prompt information in response to determining that a predetermined condition is satisfied, wherein the predetermined prompt information prompts creation of the predetermined widget.

11. The method of claim 1, wherein determining that the predetermined condition is satisfied comprises at least one of:
entering a work display interface, wherein at least one media work is displayed in the work display interface;
completing media work posting; or
exiting a creation interface without completing creation of the media work.

12. The method of claim 1, wherein displaying, in the predetermined widget, the object information of the at least one predetermined object in the predetermined application comprises:
displaying, in the predetermined widget, object information of a plurality of predetermined objects in the predetermined application,
wherein displaying the predetermined creation interface corresponding to the predetermined object in the predetermined application in response to triggering of the predetermined widget comprises:
displaying a predetermined creation interface corresponding to a target predetermined object in the predetermined application, in response to triggering of object information of the target predetermined object in the predetermined widget.

13. The method of claim 1, wherein the display of the at least one predetermined object changes based on a user currently logged into the predetermined application.

14. An apparatus for interaction, comprising:
a widget providing module configured to provide a predetermined widget, wherein the predetermined widget is associated with a predetermined creation interface of a predetermined application;
an object information display module configured to display, in the predetermined widget, object information of at least one predetermined object in the predetermined application, wherein the predetermined object is configured to create a media work in the predetermined application; and
an interface display module configured to display a predetermined creation interface corresponding to the predetermined object in the predetermined application in response to triggering of the predetermined widget.

15. An electronic device, comprising:
one or more processors; and
a storage device configured to store one or more programs,
the one or more programs, when executed by the one or more processors, causing the one or more processors to perform the method of interaction according to any one of claims 1 to 13.

16. A storage medium comprising computer-executable instructions, the computer-executable instructions, when executed by a computer processor, implementing the method of interaction according to any one of claims 1 to 13.
